Europäisches Patentamt

European Patent Office

Office européen des brevets

(19)

(11) **EP 1 429 947 B1**

(12) **FASCICULE DE BREVET EUROPEEN**

(45) Date de publication et mention
de la délivrance du brevet:
**28.09.2005 Bulletin 2005/39**

(21) Numéro de dépôt: **02779633.3**

(22) Date de dépôt: **10.09.2002**

(51) Int Cl.$^7$: **B60T 13/56**

(86) Numéro de dépôt international:
**PCT/FR2002/003065**

(87) Numéro de publication internationale:
**WO 2003/024760 (27.03.2003 Gazette 2003/13)**

(54) **PROCEDE ET APPAREIL DE DETERMINATION DE L'AMPLIFICATION D'UN SERVOMOTEUR DE FREINAGE**

METHODE UND ANORDNUNG ZUR BESTIMMUNG DER VERSTÄRKUNG EINER BREMSSERVO

METHOD FOR DETERMINING A BRAKE BOOSTER AMPLIFICATION

(84) Etats contractants désignés:
**AT BE BG CH CY CZ DE DK EE ES FI FR GB GR
IE IT LI LU MC NL PT SE SK TR**

(30) Priorité: **20.09.2001 FR 0112173**

(43) Date de publication de la demande:
**23.06.2004 Bulletin 2004/26**

(73) Titulaire: **ROBERT BOSCH GMBH
70442 Stuttgart (DE)**

(72) Inventeurs:
• **MARLHE, Nicolas
F-93270 Sevran (FR)**
• **LEBOUBE, Christophe
F-77680 Roissy en Brie (FR)**

(74) Mandataire: **Hurwic, Aleksander Wiktor
Bosch Systèmes de Freinage,
126, rue de Stalingrad
93700 Drancy (FR)**

(56) Documents cités:
**EP-A- 0 487 938          EP-A- 0 901 948
EP-A- 0 982 211          US-A- 4 934 249**

## Description

La présente invention concerne un procédé et une dispositif de détermination de la valeur instantanée de l'amplification fournie par un servomoteur d'assistance pneumatique dans un dispositif de freinage, en particulier pour véhicule automobile.

Un servomoteur d'assistance pneumatique comprend, de façon bien connue dans la technique, une chambre de dépression reliée à une source de dépression telle par exemple que le collecteur d'admission d'un moteur à combustion interne, et une chambre de travail qui est alimentée en air à la pression atmosphérique de façon sélective, ces deux chambres étant séparées l'une de l'autre par une cloison mobile portant un piston axial.

Une pédale de frein commandée par le conducteur du véhicule est reliée par une tige de commande au piston axial du servomoteur qui est lui-même relié à une tige d'actionnement d'un maître-cylindre hydraulique du dispositif de freinage. Au repos, la chambre de travail du servomoteur est reliée à la chambre de dépression et est isolée de l'atmosphère environnante. Quand le conducteur appuie sur la pédale de frein, la chambre de travail est isolée de la chambre de dépression, puis est mise en communication avec l'atmosphère environnante de sorte que la pression augmente progressivement dans cette chambre jusqu'à devenir égale à la pression atmosphérique. L'effort de freinage appliqué à la pédale par le conducteur est amplifié par le servomoteur de façon proportionnelle à la différence de pression entre les deux chambres du servomoteur, cette amplification atteignant une valeur maximale quand la pression dans la chambre de travail devient égale à la pression atmosphérique, le servomoteur étant alors à saturation. Le document EP 0 961 948 A1 divulgue les préambules des revendications 1 et 8.

La connaissance des valeurs des pressions ou des niveaux de vide dans les chambres du servomoteur permet de déterminer et de surveiller l'amplification fournie par le servomoteur et de contrôler l'état de ce dernier, mais nécessite de monter des capteurs de pression dans les deux chambres du servomoteur, ce qui est un inconvénient dans la mesure où il est parfois très difficile de placer un capteur dans la chambre de travail et de le relier à des moyens de traitement de l'information.

La présente invention a notamment pour but d'éviter cet inconvénient.

Elle a pour objet un procédé et un dispositif qui permettent de déterminer l'amplification fournie par un servomoteur, mais qui ne nécessitent pas de placer un capteur de pression dans la chambre de travail du servomoteur ou de mesurer directement la pression régnant dans cette chambre.

Elle propose à cet effet un procédé de détermination de la valeur instantanée de l'amplification fournie par un servomoteur d'assistance pneumatique dans un dispositif de freinage pour véhicule automobile, le servomoteur comprenant une chambre de dépression et une chambre de travail séparées par une cloison mobile portant un piston d'actionnement d'un maître-cylindre hydraulique du dispositif de freinage, ladite amplification étant proportionnelle à la différence de pression entre les deux chambres du servomoteur et le procédé comprenant des mesures de pression pneumatique dans le servomoteur et de pression hydraulique en sortie du maître-cylindre, caractérisé en ce qu'il consiste

- à utiliser la courbe caractéristique de saturation du servomoteur, cette courbe étant formée par l'ensemble des points de fonctionnement pour lesquels la pression dans la chambre de travail est égale à la pression atmosphérique et étant représentée par un segment de droite dans un repère orthonormé d'axes Pfc, Pmc, Pfc étant le niveau de vide relatif dans la chambre de dépression du servomoteur et Pmc étant la pression hydraulique en sortie du maitre-cylindre,
- à mesurer les valeurs instantanées Pmci de la pression hydraulique en sortie du maître-cylindre et Pfci du niveau de vide relatif dans la chambre de dépression du servomoteur,
- à déterminer sur ladite courbe de saturation, lors d'un freinage, le point Ps dont la coordonnée sur l'axe Pfc est la valeur instantanée mesurée du niveau de vide précité,
- à déterminer la coordonnée Pmcs du point Ps sur l'axe Pmc précité,
- et, dans le cas où la valeur instantanée mesurée Pmci est inférieure à la coordonnée Pmcs du point Ps, à prendre comme différence de pression ΔP la valeur mesurée instantanée Pmci de la pression en sortie du maître-cylindre multipliée par une constante ou la coordonnée sur l'axe Pfc du point de ladite courbe de saturation dont l'autre coordonnée est égale à Pmci,
- et, dans le cas où la valeur mesurée instantanée Pmci est supérieure ou égale à la coordonnée Pmcs du point Ps, à prendre comme différence de pression ΔP la valeur mesurée Pfci du niveau de vide relatif dans la chambre de dépression du servomoteur.

L'invention utilise donc un seul capteur de pression pneumatique, qui est monté par exemple sur une paroi fixe de la chambre de dépression du servomoteur et qui fournit une mesure instantanée de la pression, ou plus précisément du niveau de vide relatif dans la chambre de dépression, cette mesure étant combinée avec la mesure de la pression hydraulique en sortie du maître-cylindre pour calculer une valeur instantanée de la différence de pression entre les deux chambres du servomoteur et donc de l'amplification fournie par le servomoteur.

Grâce à cette connaissance de la valeur de l'amplification fournie par le servomoteur, on peut notamment remplacer un servomoteur de type classique par un servomoteur de taille réduite, qui est moins puissant mais moins encombrant que le servomoteur de type classique et qui amplifie jusqu'à saturation l'effort appliqué à la pédale, après quoi on augmente si nécessaire l'amplification au moyen d'une pompe ou analogue en adaptant l'amplification fournie initialement par la pompe à l'amplification maximale fournie par le servomoteur pour que les sensations du conducteur ne soient pas modifiées quand la pompe ou analogue vient compléter l'amplification fournie par le servomoteur.

Le procédé selon l'invention consiste également à déterminer par calcul la pression dans la chambre de travail du servomoteur à partir de la valeur déterminée de la différence de pression entre les deux chambres et à surveiller les variations de cette pression pour la détection d'un défaut ou d'une panne du servomoteur.

L'invention propose également un dispositif pour l'exécution du procédé précité, ce dispositif étant caractérisé en ce qu'il comprend des moyens de détection et de mesure de la pression dans la chambre de dépression du servomoteur, des moyens de détection et de mesure de la pression hydraulique en sortie du maître-cylindre et des moyens de traitement de l'information qui reçoivent les signaux de sortie des moyens de détection et de mesure précités et qui sont programmés pour déterminer sur la courbe de saturation du servomoteur, lors d'un freinage, le point Ps et la coordonnée Pmcs de ce point sur l'axe Pmc, comparer la valeur instantanée mesurée Pmci à la coordonnée Pmcs et, en fonction du résultat de cette comparaison, à prendre comme différence de pression $\Delta P$ soit la valeur mesurée Pmci multipliée par une constante, soit la valeur mesurée Pfci, respectivement, la chambre de travail du servomoteur étant dépourvue de moyens de détection et de mesure de la pression.

Avantageusement, les moyens de traitement de l'information sont programmés également pour déterminer par calcul la valeur instantanée de la pression dans la chambre de travail du servomoteur à partir de la différence de pression entre ces deux chambres et de la valeur instantanée mesurée Pfci du niveau de vide dans la chambre de dépression.

En outre, ces moyens de traitement de l'information sont avantageusement programmés pour commander des moyens, tels qu'une pompe ou analogue, d'augmentation de la pression hydraulique dans le circuit de freinage lorsque l'amplification maximale fournie par le servomoteur est insuffisante.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :

- la figure 1 est une vue schématique partielle d'un dispositif de freinage comprenant un dispositif selon l'invention ;

- la figure 2 est un graphe représentant la courbe caractéristique de saturation d'un servomoteur d'assistance pneumatique et une courbe de freinage ;

- la figure 3 est un graphe représentant la variation de la pression hydraulique en sortie du maître-cylindre en fonction de l'effort à la pédale ;

- la figure 4 représente la variation d'une valeur binaire correspondant à la saturation du servomoteur, en fonction du temps ; et

- la figure 5 est un organigramme des principales étapes du procédé selon l'invention.

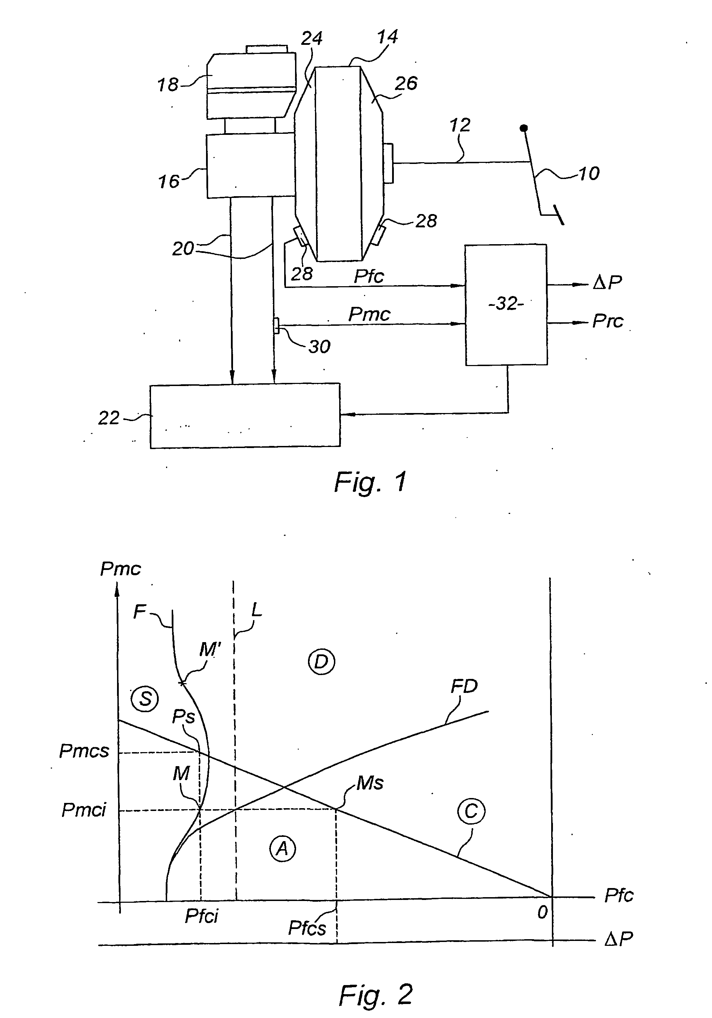

Le dispositif de freinage pour véhicule automobile représenté schématiquement en figure 1 comprend une pédale de frein 10 reliée par une tige de commande 12 à un piston axial d'un servomoteur 14 d'assistance pneumatique pour la commande d'un maître-cylindre hydraulique 16 alimenté en liquide de frein par un réservoir 18 et dont les sorties 20 sont reliées à un circuit 22 de freinage des roues du véhicule.

De façon classique, le servomoteur 14 comprend une chambre avant ou chambre de dépression 24, qui reliée à une source de dépression telle par exemple que le collecteur d'admission du moteur à combustion interne du véhicule, et une chambre arrière 26 ou chambre de travail qui est sélectivement reliée à la chambre de dépression 24 ou mise en communication avec l'atmosphère environnante, ces deux chambres étant séparées l'une de l'autre à étanchéité par une cloison mobile dont la partie centrale porte le piston axial du servomoteur 14, qui agit lui-même sur le piston primaire du maître-cylindre 16, par l'intermédiaire d'un moyen de réaction (non représenté).

Un capteur de pression 28 d'un type quelconque approprié est porté par une paroi fixe de la chambre de dépression 24 pour détecter et mesurer la pression régnant dans cette chambre et un capteur de pression hydraulique 30 d'un type quelconque approprié est monté sur une sortie 20 du maître-cylindre 16 pour détecter et mesurer la pression hydraulique de sortie de ce maître-cylindre. Les capteurs 28 et 30 produisent des signaux de sortie Pfc et Pmc respectivement, appliqués à des entrées de moyens 32 de traitement de l'information, qui sont programmés pour fournir les valeurs de la différence de pression $\Delta P$ entre les chambres 24 et 26 du servomoteur 14 et de la pression Prc dans la chambre de travail 26.

Avantageusement, les moyens 32 de traitement de l'information sont: également programmés pour commander si nécessaire des moyens d'augmentation de la pression hydraulique dans le circuit de freinage 22, ces moyens étant tels qu'une pompe ou analogue, faisant par exemple partie d'un circuit du type ABS ou ESP.

En fonctionnement, lorsque le conducteur appuie sur la pédale de frein 10, la chambre de travail 26 qui était jusque-là reliée à la chambre de dépression 24, est isolée de celle-ci puis mise en communication avec l'atmosphère ambiante de sorte que la pression augmente progressivement dans la chambre de travail 26 tandis que la pression dans la chambre 24 reste à une valeur inférieure à la pression atmosphérique, cette valeur étant par exemple celle de la pression dans le collecteur d'admission du moteur à combustion interne du véhicule.

La différence de pression entre les chambres 24 et 26 du servomoteur 14 amplifie l'effort appliqué à la tige de commande 12 de sorte que l'effort appliqué au piston primaire du maître-cylindre 16 est égal à l'effort appliqué à la tige de commande 12 multiplié par un coefficient d'amplification qui est lui-même égal à la différence de pression $\Delta P$ entre les chambres du servomoteur multipliée par une constante. Lorsque la pression dans la chambre 26 devient égale à la pression atmosphérique, l'amplification par le servomoteur est maximale et l'on dit alors que le servomoteur est à saturation.

En figure 2, la courbe C est la courbe caractéristique de saturation du servomoteur 14, et est constituée par l'ensemble des points de saturation du servomoteur dans un repère orthonormé d'axes Pfc et Pfmc, Pfc étant la pression ou plus exactement le niveau de vide relatif dans la chambre de dépression 24, ce niveau de vide étant égal à 0 quand la pression dans la chambre 24 est égale à la pression atmosphérique, Pmc étant la pression en sortie du maître-cylindre 16.

On voit que, dans ce repère Pfc, Pmc, la courbe de saturation C du servomoteur 14 est un segment de droite d'équation Pmc = $\alpha$.Pfc.

Dans le graphe de la figure 2, la courbe F est une courbe normale de freinage, la zone A située sous la courbe C est une zone d'amplification par le servomoteur 14, la zone S située au-dessus de la courbe C est une zone de fonctionnement du servomoteur en saturation, la zone D à droite de la ligne verticale L en trait pointillé est une zone de défaillance du servomoteur et la courbe FD est une courbe de freinage en cas de fuite entre les deux chambres 24, 26 du servomoteur.

On considère un point M de la courbe normale de freinage F, ce point M se trouvant sous la courbe de saturation C, dans la zone d'amplification A. Les coordonnées de ce point M sont Pfci, Pmci et sont fournies par les capteurs 28 et 30.

Pour déterminer la différence de pression $\Delta P$ entre les chambres 24 et 26, on se ramène au cas où le point considéré se trouve sur la courbe de saturation C pour le même effort d'entrée appliqué à la pédale, ce point de la courbe de saturation correspondant à une différence de pression $\Delta P$ qui est égale à l'abscisse de ce point sur l'axe Pfc, puisque la saturation est obtenue quand la pression dans la chambre de travail 26 est égale à la pression atmosphérique et a donc une valeur relative nulle.

Comme pour le même effort d'entrée, on a la même pression hydraulique de sortie du maître-cylindre Pmc, le point recherché sur la courbe C est le point Ms ayant la même ordonnée Pmci que le point M de la courbe de freinage. Ce point Ms a une abscisse Pfcs qui représente la différence de pression $\Delta P$ entre les deux chambres 24, 26 au point M.

Cette différence de pression $\Delta P$ au point M peut également s'écrire Pmci/$\alpha$.

Lorsque le point considéré de la courbe de freinage F se trouve en M' au-dessus de la courbe de saturation C, l'amplification est la même que si ce point se trouvait sur la courbe de saturation C et la différence de pression $\Delta P$ entre les deux chambres du servomoteur est donc égale à l'abscisse Pfc du point M'.

Pour vérifier si un point de la courbe de freinage F se trouve au-dessous ou au-dessus de la courbe de saturation C, on considère le point Ps ayant la même abscisse Pfci que celle mesurée du point M considéré, on détermine l'ordonnée Pmcs de ce point qui est égale à $\alpha$ Pfci, et on vérifie si l'ordonnée mesurée Pmci du point M est supérieure ou inférieure à Pmcs.

En cas de défaillance du servomoteur 14, par exemple dans le cas d'une fuite entre les deux chambres 24, 26, la courbe de freinage obtenue par enfoncement de la pédale 10 est la courbe FD pour laquelle on voit que la pression relative dans la chambre 24 tend vers zéro au cours du freinage. La zone de défaillance D dans le graphe de la figure 2 est délimitée à droite d'une ligne L parallèle à l'axe Pmc.

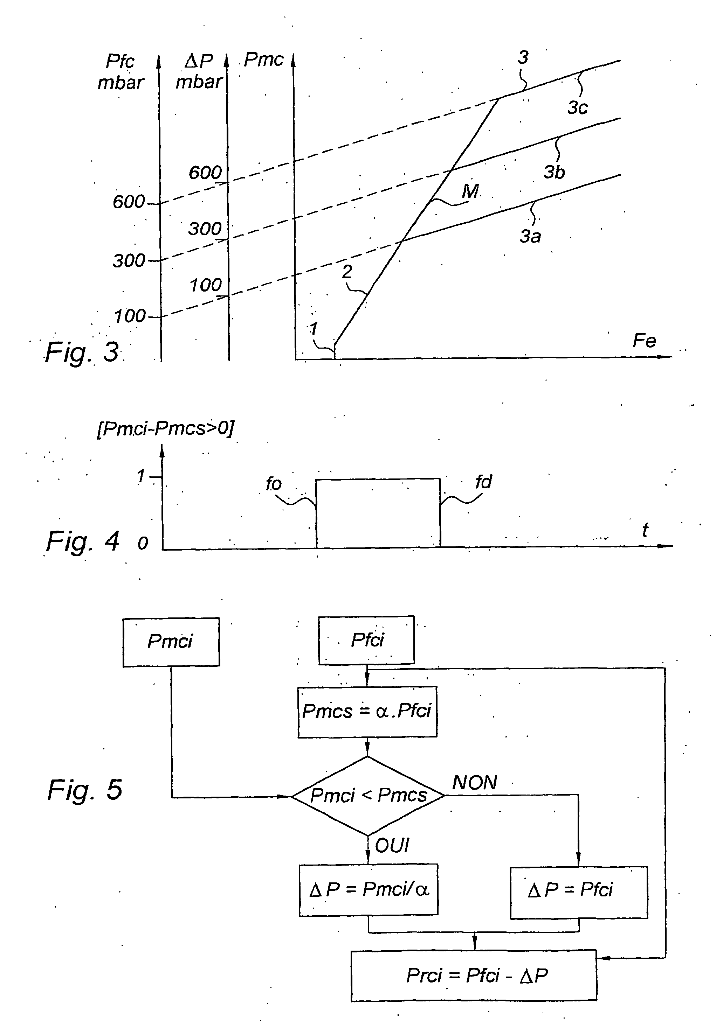

En figure 3, on a représenté la variation de la pression hydraulique de sortie Pmc du maître-cylindre 16 en fonction de l'effort d'entrée Fe appliqué à la pédale 10. La courbe Pmc = f(Fe) est connue et déterminée par le dimensionnement du dispositif de freinage. Cette courbe comprend une première partie 1 qui correspond à la phase de saut, une deuxième partie 2 qui correspond à l'amplification par le servomoteur et une troisième partie 3 qui correspond au fonctionnement lorsque le servomoteur 14 est saturé. Dans cette partie 3 de la courbe, l'amplification de l'effort d'entrée Fe est dûe au maître-cylindre 16 et correspond à un rapport de sections différent de 1.

Comme, à la saturation, la différence de pression $\Delta P$ entre les deux chambres du servomoteur est égale à la pression relative dans la chambre de dépression 24, on peut visualiser en figure 3 les valeurs de cette différence de pression $\Delta P$ et de cette pression relative Pfc sur deux axes verticaux parallèles à l'axe des ordonnées Pmc, en prolongeant la partie 3 de la courbe Pmc, comme représenté en pointillé.

Les trois parties de courbe parallèles 3a, 3b, 3c sont obtenues pour trois valeurs différentes de $\Delta P$ et donc de Pfc égales par exemple à 100, 300 et 600 mbars, respectivement.

Sur la courbe Pmc, la pente de la partie 2 est connue ainsi que les coordonnées du point de jonction entre les parties 1 et 2 de la courbe. En ce point, on sait également que $\Delta P$ = 0. L'amplification globale en un point M de la partie 2 de la courbe est égale au produit de l'amplification par le servomoteur et de l'amplification par le maître-cylindre. On peut calculer cette amplification globale à partir de la coordonnée mesurée Pmci du point M par la formule :

$$K(M) = a.Pmci/(Pmci - P1 + a.F1)$$

où P1 et F1 sont les coordonnées du point de jonction entre les parties 1 et 2 de la courbe Pmc en figure 3 et a est la pente de la partie 2 de la courbe.

Cette formule est valable pour la partie 2 de la courbe, ce qui nécessite de vérifier d'abord si on a atteint ou non le point de saturation du servomoteur. On peut faire cette vérification simplement à partir de la relation Pmci - Pmcs > 0, à laquelle on donne la valeur 0 quand elle est fausse et la valeur 1 quand elle est vraie, ce qui se traduit en fonction du temps par une courbe en échelon ou en créneau comme représenté en figure 4. La détection du front de montée f0 de cette courbe correspond à l'arrivée au point de saturation au freinage, et la détection du front de descente fd correspond au passage par le point de saturation au défreinage.

Les principales opérations du procédé selon l'invention sont représentées schématiquement dans l'organigramme de la figure 5.

Connaissant la courbe de saturation C du servomoteur, on mesure les valeurs instantanées Pfci et Pmci au moyen des capteurs 28 et 30, on détermine la coordonnée Pmcs du point Ps par la relation $\alpha$.Pfci, on vérifie si Pmci est ou non inférieur à Pmcs et si oui, on obtient la différence de pression $\Delta$P entre les deux chambres du servomoteur par la relation $\Delta$P = Pmci/$\alpha$ (ou $\Delta$P = Pfcs), tandis que si non on obtient $\Delta$P par la relation $\Delta$P = Pfci.

Connaissant $\Delta$P et Pfci, on peut ensuite calculer la pression dans la chambre de travail 26 du servomoteur par la relation Prci = Pfci - $\Delta$P.

La connaissance de la pression dans la chambre de travail 26 permet de contrôler l'état du servomoteur 14 et de vérifier son bon fonctionnement. Les fuites entre les deux chambres du servomoteur peuvent également être détectées directement à partir de Pfci, lorsque la valeur instantanée mesurée du niveau de vide dans la chambre de dépression 24 dépasse au cours du freinage une valeur définie par l'abscisse de la droite L en figure 2.

La détection d'une défaillance du servomoteur 14 est utilisée pour déclencher l'émission d'un signal à l'attention du conducteur, et/ou pour activer un système de secours et/ou pour piloter un moyen d'amplification complémentaire.

La connaissance de l'amplification instantanée par le servomoteur 24 ou de l'amplification globale instantanée (produit de l'amplification instantanée par le servomoteur et de l'amplification par le maître-cylindre 16) permet, quand on arrive sur la courbe de saturation C du servomoteur lors d'un freinage, de poursuivre cette amplification en partant de la valeur obtenue sur la courbe C, par pilotage d'un moyen d'augmentation de pression présent dans le circuit de freinage, tel par exemple qu'une pompe hydraulique dans un circuit ABS ou analogue. Il n'y a ainsi pas de discontinuité dans l'amplification de l'effort appliqué à la pédale et le changement de moyen d'amplification n'est pas perceptible par le conducteur du véhicule.

Cela permet notamment d'utiliser un servomoteur 14 de taille réduite, par rapport à celle d'un servomoteur de type classique, et donc de réduire l'encombrement général du dispositif de freinage. On peut ainsi par exemple utiliser un servomoteur 14 de taille réduite, qui a un point de saturation à 40 bars alors qu'un servomoteur de type classique a par exemple un point de saturation aux alentours de 80-90 bars.

**Revendications**

1. Procédé de détermination de la valeur instantanée de l'amplification fournie par un servomoteur d'assistance pneumatique dans un dispositif de freinage pour véhicule automobile, le servomoteur (14) comprenant une chambre de dépression (24) et une chambre de travail (26) séparées par une cloison mobile portant un piston d'actionnement d'un maître-cylindre hydraulique (16) du dispositif de freinage, ladite amplification instantanée étant proportionnelle à la différence de pression ($\Delta$P) entre les deux chambres du servomoteur et le procédé comprenant des mesures de pression pneumatique dans le servomoteur et de pression hydraulique à la sortie du maître-cylindre (16), **caractérisé en ce qu'**il consiste :

   - à utiliser la courbe caractéristique de saturation (C) du servomoteur (14), cette courbe étant formée par l'ensemble des points de fonctionnement pour lesquels la pression dans la chambre de travail (26) est égale à la pression atmosphérique et étant représentée par un segment de droite dans un repère orthonormé d'axes (Pfc, Pmc), Pfc étant le niveau de vide relatif dans la chambre de dépression (24) du servomoteur et Pmc étant la pression hydraulique en sortie du maître-cylindre (16),
   - à mesurer les valeurs instantanées (Pmci) de la pression hydraulique en sortie du maître-cylindre (16) et (Pfci) du niveau de vide relatif (Pfc) dans la chambre de dépression du servomoteur,
   - à déterminer sur ladite courbe caractéristique de saturation (C), lors d'un freinage, le point (Ps) dont la coordonnée sur l'axe (Pfc) est la valeur instantanée mesurée (Pfci) du niveau de vide précité,

- à déterminer la coordonnée (Pmcs) du point (Ps) sur l'axe (Pmc),
- et, dans le cas où la valeur instantanée mesurée (Pmci) est inférieure à la coordonnée (Pmcs), à prendre comme différence de pression ($\Delta$P) la coordonnée sur l'axe (Pfc) du point de ladite courbe de saturation (C) dont l'autre coordonnée est égale à (Pmci) ou à déterminer la différence de pression ($\Delta$P) à partir de la valeur mesurée instantanée (Pmci) de la pression en sortie du maître-cylindre multipliée par une constante,
- et, dans le cas où la valeur instantanée mesurée (Pmci) est supérieure ou égale à la coordonnée (Pmcs) du point (Ps), à prendre comme différence de pression ($\Delta$P) la valeur mesurée (Pfci) du niveau de vide relatif dans la chambre de dépression (24) du servomoteur (14).

2. Procédé selon à la revendication 1, **caractérisé en ce que** ladite constante est égale à l'inverse de la pente $\alpha$ de ladite courbe de saturation (C) dans le repère (Pfc, Pmc).

3. Procédé selon à la revendication 1 ou 2, **caractérisé en ce qu'**il consiste à utiliser un servomoteur (14) de taille réduite, à amplifier l'effort (Fe) appliqué à la pédale au moyen du servomoteur (14) jusqu'à saturation de ce dernier, puis à amplifier encore la pression hydraulique en sortie du maître-cylindre en utilisant un autre moyen d'amplification de pression tel par exemple qu'une pompe ou analogue et en pilotant ce moyen d'amplification de pression pour lui faire fournir une amplification initiale sensiblement égale à l'amplification fournie en saturation par le servomoteur (14).

4. Procédé selon l'une des revendications précédentes, **caractérisé en ce qu'**il consiste à donner à la différence (Pmci - Pmcs) une valeur binaire égale à 0 quand cette différence est inférieure à 0 et égale à 1 quand cette différence est supérieure à 0, et à surveiller les changements d'état de cette valeur binaire pour déterminer les points de saturation du servomoteur au freinage et au défreinage.

5. Procédé selon l'une des revendications précédentes, **caractérisé en ce qu'**il consiste à déterminer la pression (Prci) instantanée dans la chambre de travail (26) du servomoteur par calcul à partir de la valeur déterminée de la différence de pression ($\Delta$P) et à surveiller les variations de cette pression pour la détection d'une défaillance du servomoteur.

6. Procédé selon la revendication 5, **caractérisé en ce qu'**on détermine la pression dans la chambre de travail (26) du servomoteur par la relation Prci = Pfci - $\Delta$P.

7. Procédé selon l'une des revendications précédentes, **caractérisé en ce qu'**il consiste à détecter une défaillance du servomoteur (14) à partir de l'évolution de la pression instantanée mesurée (Pfci) dans la chambre de dépression (24) lors d'un freinage au-delà d'une valeur limite prédéterminée.

8. Dispositif pour l'exécution du procédé décrit dans l'une des revendications précédentes, **caractérisé en ce qu'**il comprend des moyens (28, 30) de détection et de mesure de la pression dans la chambre de dépression (24) du servomoteur (14) et de la pression hydraulique en sortie du maître-cylindre (16), et des moyens (32) de traitement de l'information, qui reçoivent les signaux de sortie des moyens (28, 30) de détection et de mesure précités et qui sont programmés pour déterminer sur la courbe de saturation (C) du servomoteur (14), lors d'un freinage, le point (Ps) et sa coordonnée (Pmcs) sur l'axe (Pmc), comparer la valeur instantanée mesurée (Pmci) à la coordonnée (Pmcs) et en fonction du résultat de cette comparaison, déterminer la différence de pression ($\Delta$P) par le produit de la valeur mesurée (Pmci) et d'une constante ou par la valeur mesurée instantanée (Pfci) du niveau de vide dans la chambre de dépression (24), respectivement, la chambre de travail (26) du servomoteur (14) étant dépourvue de moyens de détection et de mesure de pression.

9. Dispositif selon la revendication 8, **caractérisé en ce que** les moyens (32) de traitement de l'information sont programmés pour déterminer par calcul la valeur instantanée de la pression (Prci) dans la chambre de travail (26) du servomoteur.

10. Dispositif selon la revendication 8 ou 9, **caractérisé en ce que** les moyens de traitement de l'information sont programmés pour commander des moyens d'amplification de la pression hydraulique, tels qu'une pompe ou analogue, dans le circuit de freinage (22) lorsque l'amplification maximale fournie par le servomoteur (14) est insuffisante.

**Patentansprüche**

1. Verfahren zur Bestimmung des Momentanwerts der Verstärkung, die von einem pneumatischen Unterstützungsservomotor in einer Kraftfahrzeugbremsvorrichtung geliefert wird, wobei der Servomotor (14) eine Unterdruckkammer (24) und eine Arbeitskammer (26) aufweist, die durch eine bewegliche Wand getrennt sind, welche einen Kolben zur Betätigung eines Hauptzylinders (16) der Bremsvorrichtung trägt, wobei die Momentanverstärkung proportional zur Druckdifferenz ($\Delta$P) zwischen den beiden Kammern des Servomotors ist und das Verfahren Messungen des pneumatischen Drucks im Servomotor und des hydraulischen Drucks am Ausgang des Hauptzylinders (16) umfasst, **dadurch gekennzeichnet, dass** es darin besteht:

- die Sättigungskennlinie (C) des Servomotors (14) zu verwenden, wobei diese Kurve durch die Gesamtheit der Betriebspunkte gebildet ist, für die der Druck in der Arbeitskammer (26) dem Atmosphärendruck entspricht, und durch einen Geradenabschnitt in einem Achsenkoordinatensystem (Pfc, Pmc) dargestellt ist, wobei Pfc das Niveau des relativen Unterdrucks in der Unterdruckkammer (24) des Servomotors und Pmc der hydraulische Druck am Ausgang des Hauptzylinders (16) ist,

- die Momentanwerte (Pmci) des hydraulischen Drucks am Ausgang des Hauptzylinders (16) und (Pfci) das Niveau des relativen Unterdrucks (Pfc) in der Unterdruckkammer des Servomotors zu messen,

- auf der Sättigungskennlinie (C) bei einer Bremsung den Punkt (Ps) zu bestimmen, dessen Koordinate auf der Achse (Pfc) der gemessene Momentanwert (Pfci) des Niveaus des Unterdrucks ist,

- die Koordinate (Pmcs) des Punktes (Ps) auf der Achse (Pmc) zu bestimmen,

- und, wenn der gemessene Momentanwert (Pmci) kleiner ist als die Koordinate (Pmcs), die Koordinate auf der Achse (Pfc) des Punktes der Sättigungskurve (C), dessen andere Koordinate (Pmci) entspricht, als Druckdifferenz ($\Delta$P) zu nehmen oder die Druckdifferenz ($\Delta$P) ausgehend von dem gemessenen Momentanwert (Pmci) des Drucks am Ausgang des Hauptzylinders multipliziert mit einer Konstante zu bestimmen,

- und, wenn der gemessene Momentanwert (Pmci) größer oder gleich der Koordinate (Pmcs) des Punktes (Ps) ist, den gemessenen Wert (Pfci) des Niveaus des relativen Unterdrucks in der Unterdruckkammer (24) des Servomotors (14) als Druckdifferenz ($\Delta$P) zu nehmen.

2. Verfahren nach Anspruch 1, **dadurch gekennzeichnet, dass** die Konstante der Umkehrung der Steigung $\alpha$ der Sättigungskurve (C) im Koordinatensystem (Pfc, Pmc) entspricht.

3. Verfahren nach Anspruch 1 oder 2, **dadurch gekennzeichnet, dass** es darin besteht, einen Servomotor (14) von kleiner Größe zu verwenden, die Kraft (Fe), die durch den Servomotor (14) bis zu dessen Sättigung am Pedal aufgebracht wird, zu verstärken, und anschließend den hydraulischen Druck am Ausgang des Hauptzylinders weiter zu verstärken, indem ein anderes Druckverstärkungsmittel wie etwa eine Pumpe oder dergleichen verwendet und dieses Druckverstärkungsmittel so angesteuert wird, dass es eine Anfangsverstärkung liefert, die im Wesentlichen der durch den Servomotor (14) bei Sättigung gelieferten Verstärkung entspricht.

4. Verfahren nach einem der vorhergehenden Ansprüche, **dadurch gekennzeichnet, dass** es darin besteht, der Differenz (Pmci-Pmcs) einen binären Wert von 0 zu geben, wenn diese Differenz kleiner 0 ist, und einen binären Wert von 1, wenn diese Differenz größer 0 ist, und die Zustandsveränderungen dieses binären Werts zu überwachen, um die Sättigungspunkte des Servomotors beim Bremsen und beim Lösen der Bremse zu bestimmen.

5. Verfahren nach einem der vorhergehenden Ansprüche, **dadurch gekennzeichnet, dass** es darin besteht, den Momentandruck (Prci) in der Arbeitskammer (26) des Servomotors ausgehend von dem bestimmten Wert der Druckdifferenz ($\Delta$P) durch Berechnung zu bestimmen und die Änderungen dieses Drucks zur Erfassung eines Ausfalls des Servomotors zu überwachen.

6. Verfahren nach Anspruch 5, **dadurch gekennzeichnet, dass** der Druck in der Arbeitskammer (26) des Servomotors durch die Beziehung Prci = Pfci-$\Delta$P bestimmt wird.

7. Verfahren nach einem der vorhergehenden Ansprüche, **dadurch gekennzeichnet, dass** es darin besteht, einen Ausfall des Servomotors (14) ausgehend von der Veränderung des gemessenen Momentandrucks (Pfci) in der Unterdruckkammer (24) jenseits eines vorbestimmten Grenzwerts bei einer Bremsung zu erfassen.

8. Vorrichtung zur Durchführung des in einem der vorhergehenden Ansprüche beschriebenen Verfahrens, **dadurch gekennzeichnet, dass** sie Mittel (28, 30) zur Erfassung und Messung des Drucks in der Unterdruckkammer (24) des Servomotors (14) und des hydraulischen Drucks am Ausgang des Hauptzylinders (16) aufweist sowie Mittel (32) zur Informationsverarbeitung, die die Ausgangssignale der zuvor genannten Erfassungs- und Messmittel (28, 30) erhalten und so programmiert sind, dass sie den Punkt (Ps) und seine Koordinate (Pmcs) auf der Achse (Pmc) auf der Sättigungskurve (C) des Servomotors (14) bei einer Bremsung bestimmen, den gemessenen Momentanwert (Pmci) mit der Koordinate (Pmcs) vergleichen und in Abhängigkeit von dem Ergebnis dieses Vergleichs die Druckdifferenz (ΔP) durch das Produkt aus dem gemessenen Wert (Pmci) und einer Konstante bzw. durch den gemessenen Momentanwert (Pfci) des Niveaus des Unterdrucks in der Unterdruckkammer (24) bestimmen, wobei die Arbeitskammer (26) des Servomotors (14) keine Mittel zur Erfassung und Messung des Drucks aufweist.

9. Vorrichtung nach Anspruch 8, **dadurch gekennzeichnet, dass** die Mittel (32) zur Informationsverarbeitung so programmiert sind, dass sie den Momentanwert des Drucks (Prci) in der Arbeitskammer (26) des Servomotors durch Berechnung bestimmen.

10. Vorrichtung nach Anspruch 8 oder 9, **dadurch gekennzeichnet, dass** die Mittel zur Informationsverarbeitung so programmiert sind, dass sie Mittel zur Verstärkung des hydraulischen Drucks wie etwa eine Pumpe oder dergleichen im Bremskreis (22) steuern, wenn die vom Servomotor (14) gelieferte, maximale Verstärkung nicht ausreichend ist.

**Claims**

1. Process for the determination of the instantaneous value of the amplification provided by a pneumatic-assistance servomotor in a braking device for a motor vehicle, wherein the servomotor (14) comprises a negative-pressure chamber (24) and a working chamber (26), which are separated by a moving partition wall bearing a piston for the actuation of a hydraulic master cylinder (16) of the braking device, said instantaneous amplification being proportional to the pressure difference (ΔP) between the chambers of the servomotor, and wherein said process comprises measurements of the pneumatic pressure in the servomotor and of the hydraulic pressure at the exit from the master cylinder (16), **characterised in that** it consists in :

   - making use of the characteristic saturation curve (C) of the servomotor (14), such curve consisting of all the operating points for which the pressure inside the working chamber (26) is equal to the atmospheric pressure, and being represented by a line segment in an orthonormal plot of axes (Pfc, Pmc), where Pfc is the relative vacuum level in the negative-pressure chamber (24) of the servomotor, whereas Pmc stands for the hydraulic pressure at the exit from the master cylinder (16) ;
   - measuring the instantaneous values (Pmci) of the hydraulic pressure at the exit from the master cylinder (16), and (Pfci) of the relative vacuum level (Pfc) in the negative-pressure chamber of the servomotor ;
   - determining, on said characteristic saturation curve (C), in the course of a braking operation, the point (Ps) the coordinate of which, on the axis (Pfc), is the measured instantaneous value (Pfci) of said vacuum level ;
   - determining the coordinate (Pmcs) of the point (Ps) on the axis (Pmc) ;
   - and, if the measured instantaneous value (Pmci) is lower than the coordinate (Pmcs), in taking, as the pressure difference (ΔP), the coordinate, on the axis (Pfc), of the point on said saturation curve (C), the other coordinate of which is equal to (Pmci), or in determining the pressure difference (ΔP) from the measured instantaneous value (Pmci) of the pressure at the exit from the master cylinder, multiplied by a constant ;
   - and, if the measured instantaneous value (Pmci) is higher than or equal to the coordinate (Pmcs) of the point (Ps), in taking, as the pressure difference (ΔP), the measured value (Pfci) of the relative vacuum level in the negative-pressure chamber (24) of the servomotor (14).

2. Process according to claim 1, **characterised in that** said constant is equal to the inverse of the slope (α) of said saturation curve (C) in the plot (Pfc, Pmc).

3. Process according to claim 1 or claim 2, **characterised in that** in consists in using a smaller-size servomotor (14), in amplifying the force (Fe), exerted on the brake pedal, by means of the servomotor (14) until such time as the latter reaches the saturation state, and then in further amplifying the hydraulic pressure at the exit from the master cylinder using another pressure-amplifying means, such as a pump or similar, and in activating and adjusting said pressure-amplifying means in such a way that it provides an initial amplification, which is substantially equal to that provided by the servomotor (14) on saturation.

4. Process according to any one of the preceding claims, **characterised in that** it consists in assigning a binary value to the difference (Pmci - Pmcs), said value being equal to 0 when said difference is lower than 0, and equal to 1 when said difference is higher than 0, and in monitoring the change of state of said binary value so as to determine the saturation points of the servomotor during a braking operation and also when the brake pedal is released.

5. Process according to any one of the preceding claims, **characterised in that** it consists in determining the instantaneous pressure (Prci) inside the working chamber (26) of the servomotor, using computation, on the basis of the determined value of the pressure difference ($\Delta$P), and in monitoring the changes said pressure so as to detect a possible failure in the servomotor.

6. Process according to claim 5, **characterised in that** the pressure, prevailing inside the working chamber (26) of the servomotor is determined by means of the relationship Prci = Pfci - $\Delta$P.

7. Process according to any one of the preceding claims, **characterised in that** it consists in detecting a possible failure in the servomotor (14), from the trend of the measured instantaneous pressure (Pfci) inside the negative-pressure chamber (24) in the course of a braking operation beyond a predetermined limit value.

8. Device for the implementation of the process as described in any one of the preceding claims, said device being **characterised in that** it comprises detecting and measuring means (28, 30) for the pressure inside the negative-pressure chamber (24) of the servomotor (14) and for the hydraulic pressure at the exit from the master cylinder (16), and data-processing means (32), which receive the output signals from said detecting and measuring means (28, 30) and which are programmed so as to determine, on the saturation curve (C) of the servomotor (14), in the course of a braking operation, the point (Ps) and its coordinate (Pmcs) on the axis (Pmc), and so as to compare the measured instantaneous value (Pmci) with the coordinate (Pmcs) and, depending on the result of such comparison, to determine the pressure difference ($\Delta$P) using the product of the measured value (Pmci), multiplied by a constant, or using the measured instantaneous value (Pfci) of the vacuum level inside the negative-pressure chamber (24), respectively, wherein the working chamber (26) of the servomotor (14) is devoid of pressure-detecting and measuring means.

9. Device according to claim 8, **characterised in that** the data-processing means (32) are programmed so as to determine, by computation, the instantaneous value of the pressure (Prci) inside the working chamber (26) of the servomotor.

10. Process according to claim 8 or claim 9, **characterised in that** the data-processing means are programmed so as to control means, such as a pump or similar, intended to amplify the hydraulic pressure in the braking circuit (22), when the maximum amplification, provided by the servomotor (14), is insufficient.

Fig. 1

Fig. 2

Fig. 3

Fig. 4

Fig. 5